# EUROPÄISCHE PATENTSCHRIFT

(11) **EP 1 447 205 B1**
(45) Veröffentlichungstag und Bekanntmachung des Hinweises auf die Patenterteilung: **10.09.2014**
(21) Anmeldenummer: 04001659.4
(22) Anmeldetag: 24.01.2004
(51) Int. Cl.: B29C 65/48, F16B 37/04, B29C 70/68

(54) **Krafteinleitungsvorrichtung für Strukturbauteil**
Anchoring element for a structural element
Dispositif d'ancrage pour un élément de structure

(30) Priorität: 07.02.2003 DE 10305015
(43) Veröffentlichungstag der Anmeldung: 18.08.2004
(73) Patentinhaber: Bayerische Motoren Werke Aktiengesellschaft, 80809 München (DE)
(72) Erfinder: Schievenbusch, Florian, 81547 München (DE)

(56) Entgegenhaltungen:
- GB-A- 1 253 865
- F. SCHIEVENBUSCH: "BEITRAG ZU HOCHBELASTETEN KRAFTEINLEITUNGSELEMENTEN FÜR FASERVERBUNDBAUTEILE" [Online] 11. März 2003 (2003-03-11), FAKULTÄT FÜR MASCHINENBAU UND VERFAHRENSTECHNIK DER TU CHEMNITZ , CHEMNITZ , XP002390184 Gefunden im Internet: URL:http://archiv.tu-chemnitz.de/pub/2003/ 0119/data/Dissertation_Schievenbusch_2003_ 09_10.pdf> * das ganze Dokument *

## Beschreibung

Die vorliegende Erfindung betrifft ein Strukturbauteil mit einer Krafteinleitungsvorrichtung.

Aus der GB 1,253,865 A ist bereits eine Krafteinleitungsvorrichtung zur Fixierung in oder an einem Strukturbauteil bekannt, die als hybrides Bauteil ausgeführt ist. Sie weist einen Einsatz aus Metall auf, der in einer Struktur aus Kunststoff fixiert ist.

Ein bevorzugter Anwendungsfall für eine Krafteinleitungsvorrichtung mit den Merkmalen des Oberbegriffs von Anspruch 1 ist der moderne Karosseriebau. Dabei wird in der Luft- und Raumfahrttechnik genauso wie im Kraftfahrzeugbau bei der Herstellung großer Strukturbauteile immer stärker auf Gewichtseinsparungen geachtet. Zugleich wird jedoch von diesen Bauteilen eine hohe Struktursteifigkeit und extreme mechanische Belastbarkeit gefordert. Ein Strukturbauteil ist dabei häufig als räumliche Struktur ausgebildet, insbesondere als Fahrgastzelle oder Teil davon, vorzugsweise ein Teil eines Kraftfahrzeugchassis. Aber auch im Bereich des Sports werden derartige Materialanforderungen beispielsweise für Boote, Rennyachten, Ski oder Surfboards gestellt.

Aus den genannten Gründen kommen in den vorstehend nur exemplarisch genannten Bereichen des Leichtbaus Strukturbauteile zum Einsatz, die beispielsweise nach einem Resin transfer moulding- bzw. RTM-Verfahren hergestellt werden. Als faser-verstärkte Kunststoffe, kurz FVK, kommen hier zunehmend Kohle-Faser-verstärkte Kunststoffe, abgekürzt als CFK bezeichnet, zum Einsatz, insbesondere in Form von Platten oder relativ dünnwandiger dreidimensionaler Strukturen. Die Befestigung von sonstigen Elementen an derartigen Strukturbauteilen, die Kombination eines Strukturbauteils beispielsweise mit Blech-Elementen und/oder der Zusammenbau beispielsweise einer Fahrgastzelle aus mehreren Strukturbauteilen ist jedoch nicht unproblematisch: Die Verbundmaterialien von Strukturbauteilen der genannten Art sind sehr hart und dementsprechend aber auch vergleichsweise spröde, so dass die beispielsweise aus dem konstruktiven Holz- und/oder Metallbau bekannten Verbindungen, insbesondere Schraub- und Bolzenverbindungen, hier zur Verbindung und/oder Krafteinleitung in allgemeiner Form in der Regel nicht einsetzbar sind. Auch eine beispielsweise in der EP 0 589 398 A1 offenbarte Schraube mit einer speziellen Gewindegeometrie oder ein Verbindungselement als Einsatz bzw. Insert mit Außengewinde, wie beispielsweise in der FR 2 628 799 offenbart, sind aufgrund der besonderen Materialeigenschaften und einer inneren Struktur der in RTM-Strukturbauteilen verwendeten Materialien wenig geeignet. Beide Bauformen greifen i.d.R. über ein Gewinde oder ähnliche Ausstülpungen in das CFK-Strukturteil ein und können damit eine massive Schwächung des Materials u.a. durch eine Störung und/oder fertigungstechnisch bedingte Zerstörung der inneren Faser-Struktur bewirken. Ein in das Material des Strukturbauteils eingeschnittenes Gewinde ist hinsichtlich seiner Haltbarkeit und mechanischen Belastbarkeit insbesondere bei dünnen RTM-Strukturbauteilen unzufriedenstellend. Die vorstehend beispielhaft aufgeführten Befestigungsarten sind daher gerade bei hohen Beanspruchungen auf statischen Zug und/oder Dauerwechselbelastungen an sicherheitsrelevanten Einsatzorten als nicht ausreichend zuverlässig getestet worden.

Zum nachträglichen Einbau in Thermoplaste werden nach dem Stand der Technik Gewindeeinsätze aus Metall mit gängigen Einbringverfahren vorgesehen, wie beispielsweise Warmeinbetten, Ultraschalleinschweißen sowie Kalteinpressen und Kalteinschneiden. Ferner werden beispielsweise durch Vergießen in einer Ausnehmung in einem jeweiligen Verbundstoff die in der DIN 65 308 aufgeführten Mittel eingebracht, unter die auch beispielsweise ein Einsatz gemäß der DE 37 25 974 zu zählen wäre. Weiterhin werden Gewindeeinsätze bevorzugt für Krafteinleitungspunkte an Sandwichkonstruktionen verwendet. Eine an die Herstellung eines Strukturbauteils anschließende Einbettung eines derartigen Mittels zur Schaffung eines Verbindungs- und/oder Krafteinleitungspunktes bewirkt jedoch ebenfalls eine erhebliche Störung der Kraftverläufe innerhalb des Strukturbauteils. Ferner ist neben einer jeweiligen Verbindung zwischen einem Einsatz und einer gewählten Einbettung auch jeder Übergang zwischen der Einbettung und dem Strukturbauteil hinsichtlich seiner mechanischen Eigenschaften kritisch zu betrachten.

Neben diesen und ähnlichen, auch beispielsweise in der DIN aufgeführten Mitteln werden häufig Gewindebuchsen für Kunststoffformteile nach DIN 16 903 Teile 1 bis 4 auch in schwerer Bauart vorgeschlagen, die als Metalleinsätze auch schon im Zuge der Herstellung in ein Strukturteil eingesetzt werden können. Dazu werden sowohl in Thermoplasten als auch in Duroplasten Gewindeeinsätze aus Metall in das Werkzeug eingelegt und umpresst oder umspritzt. Damit muss jedoch für einen jeden späteren Krafteinleitungspunkt an dem Strukturteil eine Gewindebuchse in eine Press- und Aushärtungsform eingelegt, dort genau positioniert und gehalten werden. Dieses Verfahren ist somit sehr aufwendig und aufgrund der üblicherweise in Handarbeit ausgeführten Positionierungsarbeiten teuer sowie unpräzise. Schrumpfungen des Strukturteils bei Abschluss der Fertigung können zudem i.d.R. nicht ausreichend genau eingerechnet werden, so dass auch hierdurch zusätzlich relativ hohe Fertigungstoleranzen auftreten können. Direkt beispielsweise in die nachfolgend ohne Ausschluss einer Anwendung auf andere Wertstoffe betrachteten CFK-Bauteile integrierte Metalleinsätze führen zu hohen Werkzeugkosten für Aufnahme, Positionierung und Abdichtung dieser Elemente während des Fertigungsprozesses. Insbesondere für Großbauteile aus FVK führt dies ob der Vielzahl der Krafteinleitungspunkte zu sehr hohen Investitionskosten.

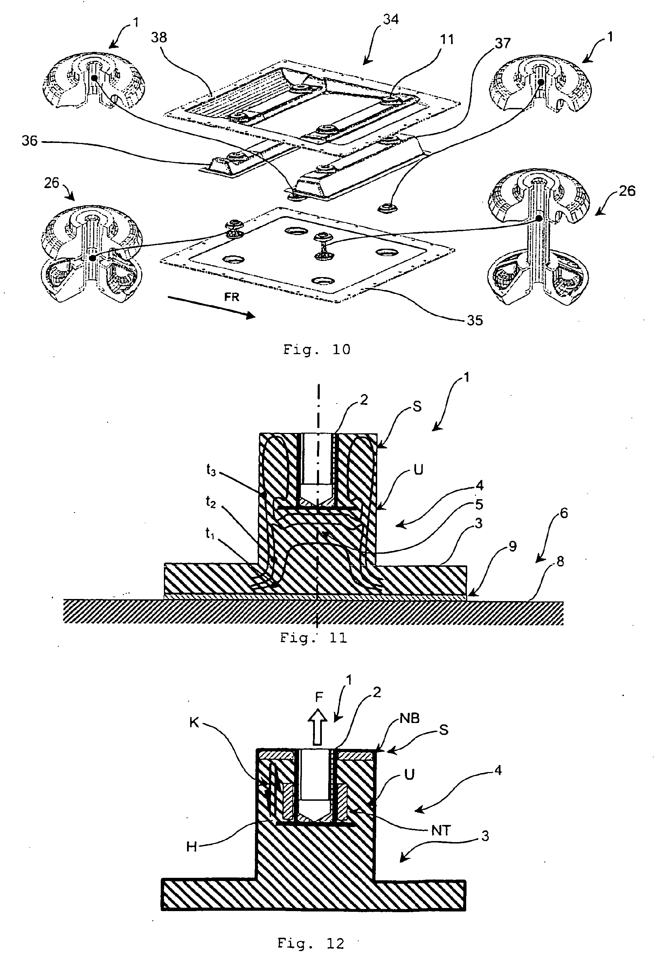

Aus den vorstehend genannten Gründen wird eine Entkopplung eines Strukturbauteils selber und der jeweils stark beanspruchbaren Krafteinleitungspunkte angestrebt. Die Einführung von Einsatzbauteilen, die nach der Fertigstellung des Strukturbauteils mit diesem verbunden werden, hat eine leichter anpassbare Fertigung nach modularen Konzepten bzw. nach dem Baukastenprinzip ermöglicht. Einfache Klebebolzen und/oder Klebemuttern sind dabei deutlich weniger belastbar als eine hybride Krafteinleitungsvorrichtung, die aus einem Metall-Einsatz und einer Kunststoffstruktur besteht, die beispielsweise als sog. Sheet moulding compound, kurz SMC, gefertigt ist. Herstellungsverfahren für Krafteinleitungsvorrichtungen nach dem Stand der Technik werden beispielsweise in einer Dissertation mit dem Titel "Zur Festigkeit von Schraubenverbindungen an Bauteilen aus SMC" von Frank Trinter, Universität-Gesamthochschule Kassel 1991 offenbart. Nachfolgend wird eine Bauform unter Bezugnahme auf die Abbildung der Figuren 11 und 12 beschreiben, die im Vergleich mit reinen Metallverbindungen jedoch nur eine Verbesserung hinsichtlich einer Minderung des Gewichts bewirkt, aber im Hinblick auf eine mechanische Belastbarkeit diesen altbekannten Verbindungstechniken nicht entsprechen kann. Der Hauptgrund hierfür liegt bei der vorliegend betrachteten und allen sonstig bekannten hybrid aufgebauten Vorrichtung darin, dass bekannte Gewindeeinsätze insbesondere in dem FVK keine ausreichende Verankerungsfestigkeit erreichen. Gängige Größen von Krafteinleitungsvorrichtungen entsprechen damit hinsichtlich ihrer mechanischen Belastbarkeit nur einer niedrigfesten M8 Schraubverbindung, wie noch im Detail dargelegt wird.

Es ist daher die Aufgabe der vorliegenden Erfindung, ein Strukturbauteil mit einer Krafteinleitungsvorrichtung mit verbesserten mechanischen Eigenschaften zu schaffen.

Die Aufgabe wird erfindungsgemäß durch die Merkmale des unabhängigen Anspruchs 1. Vorteilhafte Weiterbildungen sind in den jeweiligen Unteransprüchen gekennzeichnet.

Ein erfindungsgemäßes Strukturbauteil mit einer Krafteinleitungsvorrichtung zur Fixierung in oder an einem Strukturbauteil, die als hybrides Bauteil ausgeführt ist mit einem Einsatz aus Metall, der in einer Struktur aus Kunststoff fixiert ist, zeichnet sich demnach dadurch aus, dass die Struktur zum Fixieren in einer Ausnehmung des Strukturbauteils ausgebildet ist. Die Krafteinleitungsvorrichtung ist also dazu ausgebildet, als Insert in der Primärstruktur formschlüssig in einer Prägung oder sonstigen Ausnehmung des Strukturbauelements aufgenommen zu werden. Durch diese Anpassung auf eine besondere Verwendung wird eine gegenüber bekannten Vorrichtungen verbesserte Weiterleitung der auftretenden Lasten in die Primärstruktur und eine gleichmäßigere Verteilung angreifender Kräfte unterstützt.

Bevorzugt ist die Struktur zum Einkleben in eine im Wesentlichen tellerförmige Einprägung in dem Strukturbauteil ausgebildet. In die Primärstruktur wird damit eine im Wesentlichen rotationssymmetrische Ausnehmung als Vertiefung, Prägung o.ä. eingebracht. Die Krafteinleitungsvorrichtung wird als Insert in der Primärstruktur formschlüssig in einer Prägung des Strukturbauelements aufgenommen. Das Krafteinleitungselement ist einseitig mit der Primärstruktur verklebt. Dieses Vorgehen erlaubt, bei der Konstruktion der Primärstruktur den der Klebung gegenüberliegenden, zur Verfügung stehenden Bauraum auszunutzen, wie noch anhand eines Ausführungsbeispiels dargestellt wird. Die Prägung dient als formschlüssige Aufnahme für das Krafteinleitungselement und zugleich als Positionierhilfe beim Verklebeprozess. Durch die Prägung wird eine lokale, geometrische Versteifung der Primärstruktur erreicht, die im Einsatz die Weiterleitung und Verteilung der auftretenden Lasten in die Primärstruktur unterstützt. Die Prägungsabmaße werden vorzugsweise auf eine jeweilige Bauform einer Krafteinleitungsvorrichtung in abgestimmter Weise standardisiert.

Zur Ausbildung einer im Vergleich mit dem Stand der Technik leistungsfähigeren und zuverlässigeren Krafteinleitungsvorrichtung umschließt die Struktur den Einsatz im Wesentlichen, insbesondere in einer Ebene, deren Normale einer Hauptkraftangriffsrichtung entspricht. In einer Weiterbildung ist die Struktur vorteilhafterweise um den Einsatz in einer axialen Richtung herum geschlossen als Dom ausgebildet. Der Dom ist über mindestens eine Rippe auf einem Grundkörper abgestützt. Die Struktur weist ferner in Anpassung auf eine jeweilige Ausnehmung oder Prägung in einer Primärstruktur an dem Grundkörper eine insgesamt tellerartige Grundfläche auf. Zur weiteren Verbesserung eines internen Kraftflusses ist der Grundkörper durch einen Verstärkungsring abgeschlossen, insbesondere als Begrenzung der tellerartigen Grundfläche. Ferner ist der Dom in einer Weiterbildung der Erfindung über den Grundkörper hinaus als Durchführung ausgebildet, in dem vorzugsweise auch eine Verdrehsicherung enthalten ist.

Eine erfindungsmäße Krafteinleitungsvorrichtung weist in einer Weiterbildung eine vorgegebenen oder auch genau definierte Oberflächenrauigkeit mindestens in einem für eine Verklebung mit einer Ausnehmung einer Primärstruktur vorgesehenen Oberflächenbereich der Struktur auf. Fertigungstechnisch günstig und sehr gut kontrollierbar wird eine derartige Oberflächenrauigkeit durch Sandstrahlen und insbesondere durch Punzieren hergestellt.

Die Struktur der Krafteinleitungsvorrichtung besteht vorzugsweise aus einem SMC, wobei eine beispielhafte Materialauswahl mit Kennzahlen und Kleberkombinationen nachfolgend unter Bezug auf die Zeichnung mit der Darstellung von Ausführungsbeispielen angegeben wird. Sehr vorteilhaft ergibt sich durch die Verwendung von SMC jedoch unmittelbar eine elektrische Isolation aller zu einer Krafteinleitungsvorrichtung gehörigen Komponenten, so dass als Material für einen Einsatz ohne separate Maßnahmen des Korrosionsschutzes auch Aluminium einsetzbar ist.

Der metallische Einsatz weist insbesondere als Angriffspunkt für äußere Kräfte mindestens eine, vorzugsweise jedoch zwei Hinterschneidungen auf. Die Hinterschneidungen sind vorzugsweise gegensinnig orientiert. Vorteilhafterweise ist ein Zwischenraum zwischen der oberen und unteren Hinterschneidung des Einsatzes in axialer Richtung von dem Material der Struktur ausgefüllt, wodurch sich gerade bei der Verwendung von SMC als Material der Struktur günstige Faserorientierungen ergeben, die in Bezug auf einen Verlauf von Kraftlinien oder Spannungslinien innerhalb der Struktur optimiert werden können. Eine derartige Einstellung ist darüber hinaus auch fertigungstechnisch mit ausreichender Genauigkeit reproduzierbar.

In einer wesentlichen Weiterbildung ist an dem Einsatz eine Hinterschneidung in Form eines Tellers ausgebildet, der vorzugsweise einen Winkel in einem Bereich von etwa 0° bis ca. 50°, insbesondere aber einen Winkel von 45° gegenüber einer Flächennormalen aufweist, so dass eine interne Krafteinleitung über den Einsatz in das Krafteinleitungselement optimiert wird, wie noch unter Bezugnahme auf ein Ausführungsbeispiel beschrieben wird. Ebenfalls zur Verbesserung der mechanischen Eigenschaft durch eine besondere Ausformung und eine daraus resultierende optimierte Belastung der beteiligten Materialien einer erfindungsgemäßen Krafteinleitungsvorrichtung im Einsatz, hier insbesondere einer Kleberschicht, weist die Ausnehmung oder Einprägung in einer Weiterbildung der Erfindung in dem Strukturbauteil einen Winkel von ca. 10° bis ungefähr 45°, vorzugsweise aber von etwa 30° als Winkel einer Prägungswand gegenüber einer Flächennormalen auf. Dem ist der Grundkörper der SMC-Struktur entsprechend angepasst ausgeformt.

Das Krafteinleitungselement bildet z.B. in Automobilkarosserien einen sicherheitsrelevanten, dynamisch dauerbelasteten und crashrelevanten Befestigungspunkt. Es hat sich in Versuchen gezeigt, dass ein mit langfaserverstärkten, duroplastischen Pressmassen, z.B. SMC, hybrid aufgebautes Element und einem umpressten metallischen Gewindeeinsatz, diesen extremen Anforderungen am besten genügt. Die bekannten geometrischen Ausgestaltungen der metallischen Gewindeeinsätze und der Struktur als FVK-Bauteile ist erfindungsgemäß als unzureichend erkannt worden. Im Gegensatz hierzu ist ein erfindungsgemäßes Krafteinleitungselement für den Einsatz in Strukturbauteilen aus endlosfaserverstärkten, duroplastischen Kunststoffen insbesondere durch die Art der Fixierung und die Kontaktfläche optimiert. Damit ist unter Verwendung der vorliegenden Erfindung das Ziel der Schaffung einer Hybrid-Verbindung erreicht, die einer hochfesten M10 Verschraubung entspricht, wie sie beispielsweise in einem Kraftfahrzeug an Crash-relevanten Stellen benötigt wird. Um erstmals derartige Kräfte durch einen Gewindeeinsatz in ein SMC-Bauteil einleiten zu können, wird in einer Ausführungsform der Erfindung insgesamt eine Neuentwicklung sowohl des SMC-Bauteils, als auch des Gewindeeinsatzes entsprechend einzelner Weiterbildungen der vorliegenden Lehre vorgeschlagen. Das vorliegende Krafteinleitungskonzept ist dabei auf einen Einsatz in FVK-Strukturen abgestimmt, die sowohl ein- als auch zweischalig aufgebaut sind, wie nachfolgend ausgeführt wird. Eine wesentliche Randbedingung ist hierbei, dass das Krafteinleitungselement flexibel und insbesondere auch nachträglich in die FVK-Strukturbauteile eingeklebt wird, wobei eine Umgießen im Zuge einer Fertigung eines jeweiligen Strukturbauteils nicht ausgeschlossen ist. Hier bietet sich auch ein Umgießen erfindungsgemäß ausgestalteter Krafteinleitungspunkte an, die beispielsweise über Stege aus SMC miteinander zum Zwecke einer leichteren Positionierung in einer Großform und einer effektiven Lagesicherung während des Herstellungsprozesses eines Strukturteils als Gitterknotenpunkte verbunden sind. Es wird also insgesamt ein sehr gut anpassbarer und dennoch vergleichsweise kostengünstiger Befestigungspunkt realisiert, der insbesondere für Anwendungen im Bereich von Mittelserien der Kraftfahrzeugindustrie geeignet ist.

Ausführungsformen der Erfindung werden nachfolgend anhand der Zeichnung näher beschrieben. In der Zeichnung zeigen:
- Figur 1:: eine schematische Darstellung einer Ausführungsform einer Krafteinleitungsvorrichtung in einer Einbaulage an einem Strukturbauteil;
- Figur 2a und 2b:: je eine perspektivische Schrägansicht einer ersten Ausführungsform einer Krafteinleitungsvorrichtung in einer Schnittdarstellung;
- Figur 3a bis 3c:: Schnittdarstellungen verschiedener Ausführungsformen von Krafteinleitungsvorrichtungen;
- Figur 4:: eine schematische Schnittdarstellung der Ausführungsform einer Krafteinleitungsvorrichtung nach Figur 3c in einer Einbaulage an einem Strukturbauteil mit Einblendung einer Faserorientierung über eine Schnittebene;
- Figur 5:: die schematische Schnittdarstellung von Figur 4 mit skizzierter Darstellung eines Kraftverlaufes innerhalb der Gesamtanordnung bei Belastung;
- Figur 6:: eine beispielhafte Darstellung eines Prüfaufbaus im Schnitt unter Verwendung der Ausführungsform einer Krafteinleitungsvorrichtung nach den Figuren 2a, 2b und 3a;
- Figur 7a und 7b:: Diagramme zur Auswertung der nach einem Versuchsaufbau gemäß Figur 6 für eine Alternative zu der Einsatz-Ausführungsform in Figur 3c ermittelten Messwerte im Vergleich zu einer bekannten Anordnung nach DIN;
- Figur 8:: eine beispielhafte Schnittdarstellung einer Ausführungsform einer Krafteinleitungsvorrichtung in einer Einbaulage an einem doppelschaligen Strukturbauteil;
- Figur 9a und 9b:: je eine perspektivische Schrägansicht einer ersten Ausführungsform von Krafteinleitungsvorrichtungen in einer Anordnung gemäß der Prinzipdarstellung von Figur 8 in einer Schnittdarstellung;
- Figur 10:: eine Explosionsdarstellung eines Anwendungsbeispiels für Krafteinleitungsvorrichtungen gemäß der Figuren 9a und 9b in perspektivischer Schrägansicht in einer Teilschnittdarstellung;
- Figur 11:: eine Schnittdarstellung einer Krafteinleitungsvorrichtung nach dem Stand der Technik zur Darstellung innerer Spannungsverläufe und;
- Figur 12:: die Schnittdarstellung von Figur 11 mit einer Kennzeichnung von Problembereichen an der bekannten Krafteinleitungsvorrichtung.

In der Abbildung von Figur 11 ist eine Krafteinleitungsvorrichtung 1 bekannter Bauart dargestellt, in der ein metallischer Gewindeeinsatz 2 in einer Struktur 3 aus einem Kunststoff eingebettet ist, wie auch in der vorstehend genannten Dissertation "Zur Festigkeit von Schraubenverbindungen an Bauteilen aus SMC" von Frank Trinter 1991 an der Universität-Gesamthochschule Kassel untersucht und veröffentlicht. Die Krafteinleitungsvorrichtung 1 ist also als hybrides Bauteil ausgeführt, wobei im Zuge der Herstellung der Gewindeeinsatz 2 mit einem SMC umschlossen wird. Dazu bildet die Struktur 3 um den Gewindeeinsatz 2 herum einen Dom 4 aus.

Ein typischer Verlauf von SMC- Fließfronten, wie er sich während der Herstellung einer bekannten Krafteinleitungsvorrichtung 1 zu beispielhaft gewählten Zeitpunkten t₁ bis t₃ ergeben kann, ist skizziert mit in die Abbildung von Figur 11 eingezeichnet worden. Nach dem Stand der Technik werden Gewindeeinsätze 2 üblicherweise von einer Hinterschneidungsfläche 5 aus mit SMC umpresst. Hierbei fließt das SMC um die krafteinleitende Hinterschneidung 5 und füllt die Wandungen des Doms 4. Die Umlenkung U der Strömung an einer Scherkante H der Hinterschneidung 5 sowie eine Staupunktströmung S an einer Spitze des Doms 4 erzeugen Bereiche, in denen keine Verstärkungsfasern mit belastungsparalleler Orientierung vorliegen. Diese Bereiche tragen zu der Verankerungsfestigkeit des Gewindeeinsatzes 2 in der SMC-Struktur 3 nicht bei. Das Ergebnis von nach der Norm durchgeführten Ausziehversuchen ist u.a. auch aus diesem Grund insgesamt mangelhaft, wie auch noch qualitativ gezeigt wird.

Einige der bei normaler Belastung in dem Bauteil nach Figur 11 auftretenden Problembereiche sind in der Abbildung von Figur 12 dargestellt: Einer erwünschten Kraftübertragung K zwischen dem Gewindeeinsatz 2 und dem SMC-Dom 4 durch Schubspannungen stehen demnach im direkten Kontakt mit einer nicht weiter dargestellten Bolzen- oder Schraubverbindung Bereiche NB gegenüber, die aufgrund der Staupunktströmung S eine nicht belastungsgerechte Faserorientierung aufweisen. Ferner treten mit NT bezeichnete Regionen auf, die aufgrund der Strömungsumlenkung U im Bereich der Hinterschneidung 5 nicht tragfähig sind. Ferner findet man auch direkt an der Hinterschneidungsscherkante H eine weitere hinsichtlich einer Belastung ungünstige Umlenkung U der Strömung des SMC-Materials.

Bei bisher verwendeten Gewindeeinsätzen 2, die in der skizzierten Art und Weise mit einer einzelnen krafteinleitenden Hinterschneidung 5 versehen sind, ist die im Werkstoff hervorgerufene Beanspruchung über der Verankerungslänge stark ungleichförmig. Der Spannungszustand wird insbesondere hinsichtlich des Mantelschubs durch eine kraftflussbedingte Beanspruchungsüberhöhung an der Hinterschneidungsscherkante H dominiert. Im Fall einer höheren Beanspruchung einer Krafteinleitungsvorrichtung 1 der dargestellten Art versagt das Bauteil daher spätestens an dieser Stelle, also im Bereich der Hinterschneidungsscherkante H, wenn nicht zuvor bereits der Gewindeeinsatz 2 aus der SMC-Struktur 3 herausgerissen oder herausgezogen worden ist.

Für Gewindeeinsätze 2 klassischer, eine horizontale Hinterschneidung 5 aufweisende Bauweise ist eine Wandstärke des Doms 4 so zu dimensionieren, so dass ein Aufplatzen des Doms 4 bei Zugbelastung der Hülse bzw. des Gewindeeinsatzes 2 vermieden wird. Für die maximale Auszugskraft des Gewindeeinsatzes 2 sind dabei die Hinterschneidungsfläche 5 sowie eine Verankerungstiefe maßgeblich. Dabei führen die im Dom 4 wirkenden Mantelschubspannungen zum Bauteilversagen. Eventuell vorhandene und hier nicht weiter eingezeichnete Rippen stützen den Dom 4 gegen Momentenbelastung ab, tragen aber nicht zur Steigerung der Auszugskraft des Gewindeeinsatzes 2 bei. Damit sind sie gegenüber einer wesentlichen Belastungsart wirkungslos und führen nur zu einer Erhöhung des Materialeinsatzes und damit zu einer Verteuerung sowie einer Steigerung des Gewichts einer bekannten Krafteinleitungsvorrichtung 1.

Die Struktur 3 ist an einer Oberfläche zur Verklebung mit einer Primärstruktur 6 eines im Weiteren nur in einem Ausschnitt dargestellten Strukturteils 7 vorgesehen. Vorgesehen ist ein ebenes Aufkleben der Struktur 3. Winkelfehler können beim Aufkleben auftreten, ein Ausgleich von Winkelfehler, die sich beispielsweise durch eine Verformung des Strukturteils 8 ergeben haben, ist jedoch nur innerhalb des sehr beschränkten zulässigen Spaltmaßes eines jeweils verwendeten Klebers möglich, so dass sich dann eine insgesamt keilförmige Kleberschicht 9 ergeben würde.

Alle vorstehend genannten Punkte stellen in diesem bekannten Bauteil Schwächungen dar, die eine zulässige Belastung auf eine Verbindung reduzieren, die äquivalent zu einer niederfesten M8-Schraubverbindung ist. Das ist für sicherheitsrelevante Krafteinleitungspunkte mit dauernder dynamischer Belastung und/oder hoher Extrembelastung unzureichend, wie insbesondere Crash-Versuche im Automobilbau gezeigt haben.

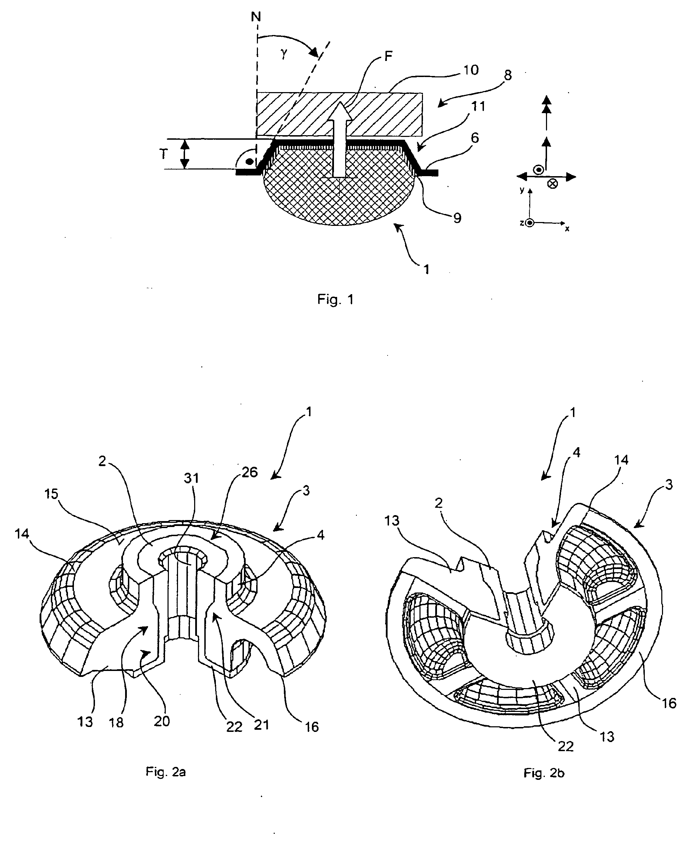

Eine wesentliche Verbesserung gegenüber dem vorstehend exemplarisch beschriebenen Stand der Technik bewirkt hier ein erfindungsgemäßer Ansatz. Demnach ist die als hybrides Bauteil ausgeführte Krafteinleitungsvorrichtung 1 zur Fixierung in oder an einem Strukturbauteil 8 ausgebildet, vorzugsweise zum Fixieren in einer Ausnehmung oder Einprägung 11 des Strukturbauteils 8. Dies ist in der schematischen Darstellung einer Krafteinleitungsvorrichtung 1 in einer Einbaulage an einem Strukturbauteil 8 bei Einleitung einer Kraft F in eine Sub- bzw. Unterstruktur 10 in der Abbildung von Figur 1 skizziert gezeigt, auf die nachfolgend Bezug genommen wird.

Für das Einkleben der Krafteinleitungsvorrichtung 1 als Hybrid-Insert in die CFK-Struktur 6 ist die Positionierung durch die formschlüssige Aufnahme in der Einprägung des Strukturbauteils 8 vorteilhaft. Im Rahmen des für einen ausgewählten Kleber zulässigen Spaltmaßes von ca. 0,9 bis ungefähr 3 mm ist weiterhin ein Ausgleich der Lagetoleranz eine Kleberschicht 9 möglich. Hierdurch können Fertigungstoleranzen, die bei der Herstellung von CFK-Primärbauteilen 6 auftreten, ausgeglichen und für nachfolgende Montageprozesse positionsgenaue Verschraubungspunkte geschaffen werden, die im Rahmen der Verklebung auch eingemessen werden. Die für die im Folgenden als Baukasten dargestellte Krafteinleitungsvorrichtung 1 vorgesehene Aufnahmeprägung, Ausnehmung oder auch Einprägung 11 wird als standardisiert festgelegt. Sie ist in der CFK-Struktur 6 so gestaltet, dass für unterschiedliche Belastungsrichtungen möglichst gleich große Anteile der Klebefläche 9 auf Schub belastet werden. Weiterhin erlauben mindestens abschnittsweise schräg verlaufende Wände der Prägung 11 einen jeweiligen Fügewinkel im Klebeprozess zu variieren. Dies unterstützt die flexible Anordnung von automatisierten Fertigungseinheiten. Das Strukturbauteil 8 weist in seiner Primärstruktur 6 also eine im Wesentlichen tellerförmige Einprägung 11 auf. Ein Winkel γ der Prägungswand gegen eine Flächennormale N sowie die Prägungstiefe T sind so gewählt, dass für unterschiedliche Betriebslastrichtungen eine möglichst gleichbleibend große Kleberfläche 9 auf Schub beansprucht wird. Demnach wird der Winkel γ in einem Bereich zwischen 0° und ca. 60° gewählt, hier ist ein Wert von 30° eingestellt worden. Idealerweise ist die Fügerichtung für die Verklebung senkrecht zu einem horizontal verlaufenden Bereich der Einprägung 11 ausgerichtet, wie in der Figur 1 dargestellt. Dann ist die Kleberschicht 9 überall gleich dick. Es wird hierbei jedoch eine Abweichung von z.B. bis zu ca. +/-30° toleriert. Im Fall einer Schrägstellung der Krafteinleitungsvorrichtung 1 gegenüber Einprägung 11 in der Primärstruktur 6 und/oder im Fall von schräg zu der Flächennormalen N einwirkenden Kräften findet durch das Einsetzten der Krafteinleitungsvorrichtung 1 in das Strukturbauteil 8 und die gewählte Formgebung wenigstens teilweise in ihren Komponenten optimal auf die Kleberfläche 9 ein.

Konstruktiv ist das dargestellte Insertkonzept einer vorgeschlagenen Krafteinleitungsvorrichtung 1 so ausgeführt, dass ein verfügbarer Fügewinkelbereich voll ausgenutzt werden kann. Dabei ist unter Form- und Stoffschluss auch bei den vorstehend genannten Abweichungen immer noch eine ausreichende Festigkeit, Korrosionsbeständigkeit und Dichtigkeit des Krafteinleitungspunktes gewährleistet. Dies bedeutet für die Automatisierung von geeigneten Fertigungsstrukturen eine hohe Flexibilität bezüglich der Auswahl und Zugänglichkeit dieser Klebepunkte.

Die aus der in Figur 1 dargestellten einseitigen Anbindung resultieren Betriebslastrichtungen, für die das Krafteinleitungselement 1 in der dargestellten Einsatzform bevorzugt geeignet ist, sind im rechten Teil von Figur 1 eingetragen. Es sind dies Kräfte entlang der x-, y- und z-Achse sowie in negativer x- und z-Richtung und Momente um die y-Achse.

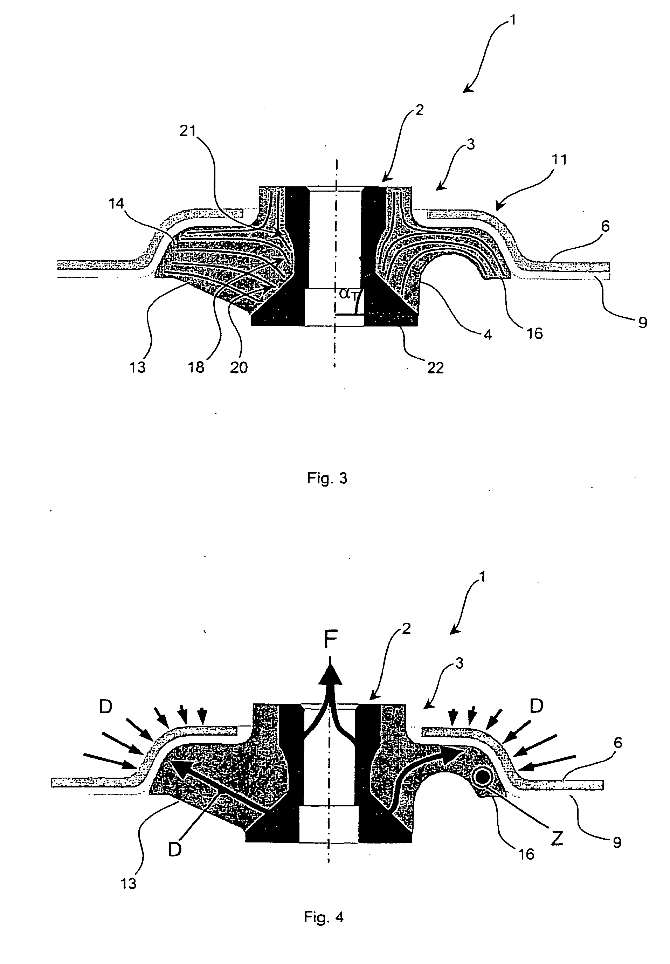

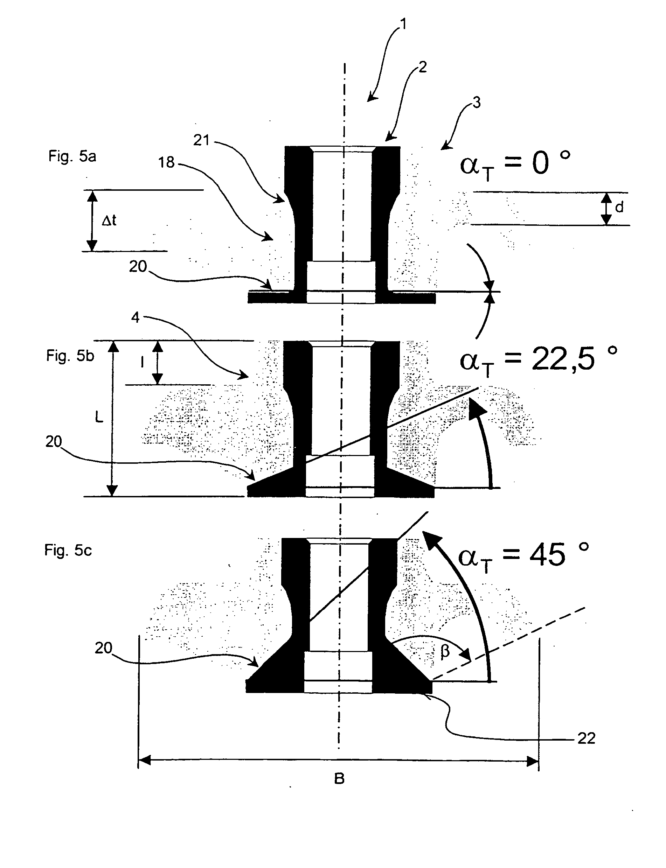

Ein konstruktiv ausgeführtes und getestetes Ausführungsbeispiel für den Aufbau einer Krafteinleitungsvorrichtung 1 als Hybrid-Insert 1 mit einer SMC-Struktur 3 und einem Einsatz 2 ist in den Darstellungen der Figuren 2a und 2b wiedergegeben. Sie umfasst eine mittigen Dom 4, der über Rippen 13 auf einen Grundkörper 14 abgestützt ist. Der Grundkörper 14 bildet eine Grundfläche 15, die in einer Einbaulage analog der Darstellung von Figur 1 über die Kleberschicht 9 form- und stoffschlüssig in Kontakt mit der Einprägung 11 der Primärstruktur 6 steht. Die Grundfläche 15 wird nach außen hin von einem Verstärkungsring 16 abgeschlossen. Bisher übliche Geometrien von SMC-Strukturen sowie praxisübliche Gewindeeinsätze nach DIN weisen demgegenüber drei wesentliche Nachteile auf, die bei einem erfindungsgemäßen Hybrid-Insert durch konstruktive Maßnahmen deutlich verbessert werden:
1. Die Verstärkungsfasern innerhalb des SMC-Materials sind im Bereich des Doms 4 belastungsgerecht ausgerichtet, wie in der Schnittzeichnung von Figur 3 dargestellt. Die SMC-Struktur 3 umschließt den Gewindeeinsatz 2 des Hybrid-Inserts 1 in axialer Richtung vollständig. Während des Herstellungsprozesses umfließt das SMC-Material nach einer vorteilhaften Ausführungsform der vorliegenden Erfindung nicht mehr die Hinterschneidung des Einsatzes 2. Anstelle dessen füllt es einen Zwischenraum 18 zwischen einer ersten Hinterschneidung 20 und einer zweiten Hinterschneidung 21, siehe die Schnittdarstellungen der Figuren 2a bis 5c. Dies erlaubt die Vermeidung Strömungsumlenkpunkten, die nicht tragfähige Bereiche NT in einem Dom 4 darstellen würden, wie bereits zum Stand der Technik anhand der Figuren 11 und 12 ausführlich beschrieben wurde.
2. An der Scherkante einer jeden Hinterschneidung 20, 21 treten keine Spannungsspitzen auf. In einem dargestellten Hybrid-Insert 1 werden im Gegensatz zu bisher verwendeten Gewindeeinsätzen 2 Strömungsumlenkpunkte an der Einsatzscherkante und der Domspitze vermieden. Das Auftreten von Kerbspannungen, wie sie an einer vollständig mit SMC umgebenen Einsatzscherkante auftreten, wird ebenfalls vermieden. Beide Verbesserungen tragen zu einem homogenem Spannungszustand in der SMC-Struktur 3 bei, der deutlich höhere Verankerungsfestigkeiten eines Einsatzes 2 in der Struktur 3 erlaubt.
3. Konstruktiv wird eine werkstoffgerechte Belastung der Versteifungsrippen 13 auf Druck erreicht. Materialuntersuchungen haben gezeigt, dass die Druckfestigkeit von SMC deutlich oberhalb der Schubfestigkeit und ebenfalls oberhalb der Zugfestigkeit liegt. Ziel bei der Weiterbildung eines erfindungsgemäßen Hybrid-Inserts 1 ist es daher, diese Werkstoffeigenschaft gezielt auszunutzen, um die Verankerungsfestigkeit eines Einsatzes 2 zu erhöhen. Hierzu werden Rippen 13 direkt in den unter Zugbelastung wirkenden Kraftfluss eingebunden. Erreicht wird dies insbesondere durch die Wahl eines Winkels α_{T} an der ersten Hinterschneidung 20. Unter diesem Winkel α_{T} ist eine der SMC-Struktur 3 zugewandte Flanke der tellerförmig ausgebildeten Hinterschneidung 20 senkrecht zu einer Mittelachse M geneigt, wie in den Abbildungen der Figur 4 sowie der Figuren 5a bis 5c zusammen dargestellt. Der Teller 22 des Einsatzes 2 begrenzt den Dom 4 der SMC-Struktur 3 und dient insofern als deren Abschluss. Ferner stehen die Rippen 13 unter einem Winkel β von ca. 90° auf der Flanke der Hinterschneidung 20, die selber in einem als besonders belastbar getesteten Fall unter einem Winkel α_{T} von 45° steht. Die in den Rippen 13 wirkenden Druckspannungen werden überwiegend durch den umlaufenden Verstärkungsring 16 aufgenommen. In dem Verstärkungsring 16 wirken dann Zugspannungen Z in Umfangsrichtung. Über den Grundkörper 15 bzw. die Oberfläche der Struktur 3 werden die Kräfte dann in der in Figur 4 dargestellten Weise als Druckverteilung D in angepasster Art und Weist über Form- und Stoffschluss an das Strukturbauteil 8 im Bereich der Einprägung 11 abgegeben. Damit werden punktuelle Überlastungen des Strukturbauteils 8 auch im Fall sehr hoher Belastungen der Krafteinleitungsvorrichtung 1 sicher vermieden oder wenigstens durch das flächige Verteilen auf ein vertretbares Maß reduziert.

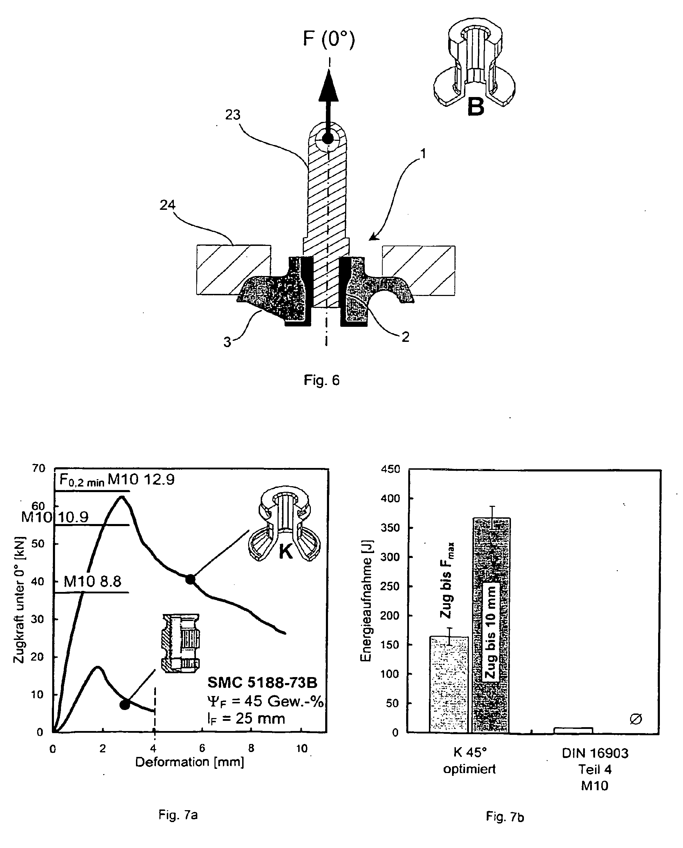

Durch den vorstehend beschriebenen Aufbau wird eine Ausnutzung der mechanischen Eigenschaften des faserverstärkten Kunststoffs FVK zur Verbesserung der Verankerungsfestigkeit der Struktur 3 in einem Strukturbauteil 8 sowie des metallischen Einsatzes 2 in der Struktur 3 gegenüber dem Stand der Technik deutlich verbessert. Nachweise hierzu wurden in einem Prüfaufbau ermittelt, wie er in beispielhafter Darstellung in Figur 6 im Schnitt unter Verwendung der Ausführungsform einer Krafteinleitungsvorrichtung nach den Figuren 2a, 2b und 3a skizziert ist: Unter einem Winkel von hier beispielsweise 0° werden hier Kraft F und Weg s über ein Prüfhilfsmittel 23 an einer Krafteinleitungsvorrichtung 1 aufgenommen, die in einer Zugplatte 24 als Prüfvorrichtung verwendungsgemäß eingesetzt ist.

In den Diagrammen von Figur 7a und 7b sind zur Auswertung der nach einem Versuchsaufbau gemäß Figur 6 für eine Alternative zu der Ausführungsform des Einsatzes 2 in Figur 3c ermittelten Messwerte graphisch dargestellt. Zusätzlich sind in den Kurvenverlauf des Auszugstests von Figur 7a Angaben zu M10-Verbindungen verschiedener Festigkeit zu den entsprechenden Mindestkräften eingetragen worden, die zum Erreichen einer 2% Streckgrenze nach VDI 2230 vorgeschrieben sind. Eine hybrid aufgebaute Krafteinleitungsvorrichtung 1 mit einem als Variante K bezeichneten Einsatz 2, Winkel α von 45°, entspricht demnach einer hochfesten M10-Verbindung. Im Vergleich zu einer Messkurve für eine bekannte Anordnung nach DIN werden die sehr vorteilhaft verbesserten mechanischen Eigenschaften einer erfindungsgemäßen Krafteinleitungsvorrichtung 1 sehr deutlich: Hier werden statt ca. 62 kN nur maximale Zugkräfte Fₘₐₓ von unter 20kN erreicht.

Das Diagramm von Figur 7b eignet sich dann auch nur bedingt zum Vergleich einer vorliegenden Krafteinleitungsvorrichtung 1 mit dem durch ein SMC 5188-73B-Bauteil repräsentierten Stand der Technik, da dieses bekannte Bauteil im Ausziehversuch bereits nach 4mm Deformation versagt: Hier reißt der bekannte DIN-Schraubeinsatz bereits heraus, wohingegen ein erfindungsgemäßes SMC-Hybridbauteil noch wesentlich größeren Kräften Stand hält. Ein faserverstärktes Duroplast, wie hier SMC, zeigt ein gutmütiges Versagensverhalten in Kombination mit einer hohen Energieaufnahme. Dies macht den Einsatz dieser Krafteinleitungselemente für crashrelevante Befestigungen interessant.

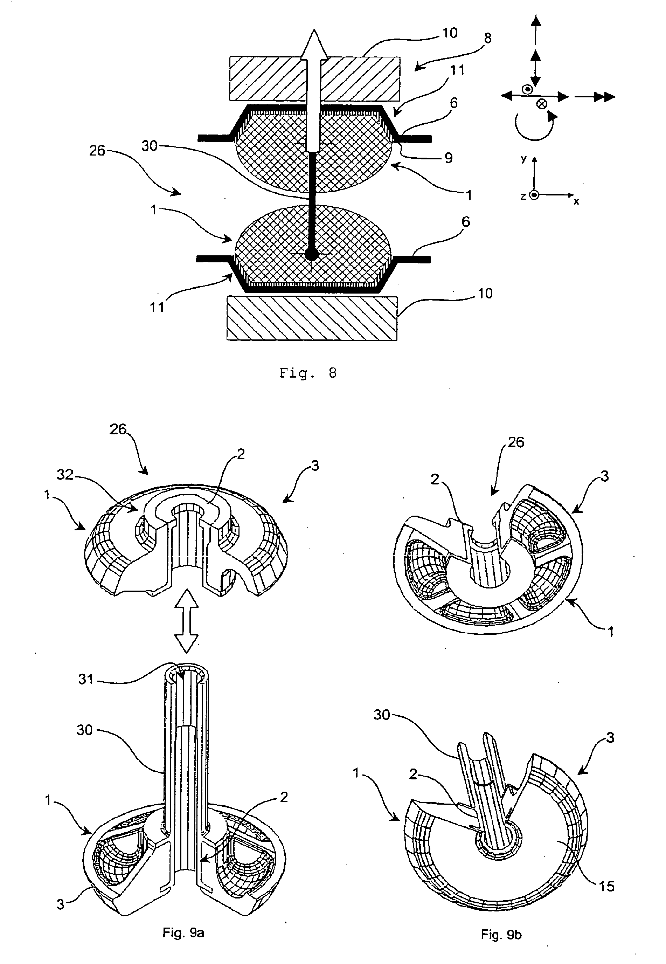

Figur 8 zeigt analog der Darstellung von Figur 1 eine Ausführungsform von Krafteinleitungsvorrichtungen 1 in einer Einbaulage an einem doppelschaligen Strukturbauteil 8 in einer prinzipiellen Schnittdarstellung. Treten hohe Kräfte Fy in negative y-Richtung bzw. hohe Momente Mz um die z-Achse bzw. Mx um die x-Achse auf, so bietet zur Anbindung des Krafteinleitungselementes 1 die konstruktive Ausführung der Primärstruktur 6 als Zweischalenkörper deutliche Vorteile gegenüber einer einschaligen Lösung gemäß Figur 1. Bei einer zweischaligen Bauweise der Primärstruktur 6 wird ein Krafteinleitungselement 26 eingesetzt, das sich über zwei Krafteinleitungsvorrichtungen 1 an Wänden bzw. Einprägungen 11 beider primären Strukturbauteile 8 abstützen kann. Hierdurch können deutlich höhere Momente Mx um die x-Achse und Mz um die z-Achse aufgenommen werden. Belastungen Fy in negative y-Richtung werden durch die zweite Bauteilwand abgestützt. Kritische Belastungsrichtungen, die bei der einschaligen Bauweise zu einem Versagen der Kleberschicht zwischen Krafteinleitungselement 1 und Primärstruktur 6 führen würden, werden damit abgefangen. Die in Bild 8 eingetragenen bevorzugten Belastungsrichtungen zeigen, dass gegenüber der einschaligen Bauweise keine ausgeprägten Vorzugslastrichtungen vorhanden sind. Sowohl bei Zug-, als auch bei Druckbelastung in y-Richtung wird eine jeweilige Kleberschicht 9 zwischen einem Krafteinleitungselement 1 und einer Primärstruktur 6 auf Druck belastet.

In der Abbildung von Figur 9a und 9b ist je eine perspektivische Schrägansicht einer Ausführungsform von Krafteinleitungsvorrichtungen 1 als ein Krafteinleitungselement 26 für eine zweischalige Primärstruktur 6 in einer Anordnung gemäß der Prinzipdarstellung von Figur 8 in einer Schnittdarstellung gezeigt. Um eine Abstützung an beiden Schalenwänden der Primärstruktur 6 zu erreichen wurde das Krafteinleitungselement 1 mit einer standardisierten Prägung 11 von der bislang ausschließlich gehandelten Primärstruktur 6 einer Oberschale 27 in eine Unterschale 28 gespiegelt. Beide Hälften sind momentensteif miteinander zu dem Krafteinleitungselement 26 verbunden. Ein Abstand A zwischen den beiden Schalen 27, 28 ist variabel zwischen den Krafteinleitungsvorrichtungen 1 einstellbar, hier über die Länge einer Hülse 30.

Das gesamte Krafteinleitungselement 26 ist so gestaltet, dass von beiden Seiten Substrukturen 10 an die Primärstruktur 6 angebunden werden können. Hierzu ist im vorliegenden Beispielfall ein Insert mit einem Gewinde 31 in der Hülse 30 versehen. Die Presskraft einer nicht weiter dargestellten Schraubverbindung wird von dem Metalleinsatz 2 aufgenommen und nicht direkt an die SMC-Adapter-Struktur 3 abgeleitet wird, wie nach dem Stand der Technik üblich.

Die Abbildungen der Figuren 2a, 2b und 9a, 9b zeigen eine konstruktive Umsetzung des Krafteinleitungskonzepts anhand einer Ausführungsform für eine einschalige und für eine zweischalige Bauweise der CFK-Primärbauteile 6. Alle drei Varianten, also eine Krafteinleitungsvorrichtung 1 für eine einschalige und ein Krafteinleitungselement 26 mit zwei gekoppelten Krafteinleitungsvorrichtungen 1 für zweischalige Primärstrukturen, bauen auf einer identischen Geometrie der SMC-Struktur 3 auf. Durch die Art der Anbindung einer Substruktur 10 bedingt ergibt sich nur der Unterschied, dass einmal der Dom 4 in Form eines Stutzens oder einer Durchführung 32 weitergeführt wird, während bei der anderen Bauform die Grundfläche 15 als ebener Kreisring ohne Ausstülpung ausgeführt ist, wobei ein Kontakt des Einsatzes 2 aus Metall mit dem Material der Primärstruktur 6 unterbunden wird. Die funktionalen Unterschiede werden im wesentlichen also durch die Verwendung unterschiedlicher Metalleinsätze 2 erreicht. Die Mechanismen, mit denen die verschiedenen Metalleinsätze 2 in der SMC-Struktur 3 verankert sind, unterscheiden sich nicht. Für die zweischalige Bauweise werden die Hybrid-Inserts 1 in dieser Bauform in der dargestellten Weise über eine Hülse 30 zusammengesteckt. Ein Gewinde 31 in der Hülse 30 und die Ausbildung des Hybrid-Inserts 1 an der Oberschale 27 mit Durchführung 32 ermöglichen eine einfache Verschraubung. Im Bereich der Durchführung 32 ist durch teilweise Abflachung des sonst rotationssymmetrischen Körpers des Einsatzes 2 eine Verdrehsicherung zur Erhöhung einer Momentenbelastbarkeit realisiert. Durch eine Anpassung der Länge der Hülse 30 werden unterschiedliche Abstände zwischen Ober- und Unterschale 27, 28 überbrückt. Eine Anbindung von Substrukturen 10 ist damit wahlweise sowohl von einer als auch von beiden Seiten des Krafteinleitungselements 26 möglich. Durch diese Variabilität in Verbindung mit einer standardisierten Aufnahme in der Primärstruktur 6 wird ein modulares Baukastensystem geschaffen, dass für eine Vielzahl unterschiedlicher Befestigungspunkte an einer Primärstruktur 6 Lösungen bereitstellt.

Alle vorgestellten Varianten der Hybrid-Inserts 1 für eine ein- und zweischalige Bauweise der CFK-Primärstruktur 6 basieren auf einem modularen, standardisierten Baukastenkonzept. Die unterschiedlichen Anforderungsprofile einer Vielzahl von Krafteinleitungsstellen werden mit nur drei Standardbauteilen abgedeckt: einer Krafteinleitungsvorrichtung 1 mit einer Durchführung 32 zur Anbindung von Substrukturen 10, einer Krafteinleitungsvorrichtung 1 ohne Durchführung und einer Hülse 31 variabler Länge. Dies ermöglicht die Realisierung von wirtschaftlichen Potentialen gegenüber zahlreichen Individuallösungen. Zusätzlich sind die drei Standardbauteile so konstruiert, dass ihre Fertigung in einem Werkzeug möglich ist. Alle drei Varianten basieren auf einer identischen Geometrie des SMC-Grundkörpers 3. Die funktionalen Unterschiede werden durch die Verwendung unterschiedlicher Metallhülsen 2 erreicht. Hierdurch ist lediglich die Herstellung eines einzigen Werkzeugs notwendig.

Die Herstellung der Hybrid-Inserts 1 erfolgt in einem Press-, Spritzpräge- oder Spritzgießverfahren. Hierzu wird für die vorstehend dargestellten konstruktiv ausgearbeiteten Bauteile ein Tauchkantenwerkzeug aus Stahl mit einer Kavität eingesetzt. Für die Struktur 3 eines SMC-Grundkörpers werden so ohne Werkzeugumbau alle Hybrid-Insert-Varianten hergestellt. Die Geometrie des SMC-Grundkörpers 3 kann je Änderung über je zwei Wechseleinsätze angepasst werden, die flexibel in die Form eingelegt werden. Ausgeführt werden so z.B. eine Veränderung der Prägungsabmaße in der Primärstruktur 6, sowie eine anderen Belastungen angepasste SMC-Wandstärke d oder eine Variation der Länge L des Doms 4, der Länge l der Durchführung 32, also dementsprechend Änderungen in einem Außendurchmesser B der Struktur 3, einer Höhe Δt des tellerartigen Grundkörpers 14 und/oder eine Dicke d des SMC-Materials, wie in den Figuren 5a bis 5c zusammen mit einer Variation des Tellerwinkels α_{T} dargestellt.

Als eine getestete Anwendung für Krafteinleitungsvorrichtungen mit sehr hohen Anforderungen an das Material wird nun die Befestigung eines Vordersitzes an einem Fahrzeugboden betrachtet. Für den Fahrzeugboden ist eine Ersatzstruktur 34 entwickelt worden, an die nachfolgend ein nicht weiter dargestellter Vordersitz geschraubt wird. Diese auch als Sitzkiste bezeichnete Ersatzstruktur 34 ist in zweischaliger Bauweise in CKF ausgeführt, wie in der Abbildung von Figur 10 als Explosionsdarstellung schräg zu einer Fahrtrichtung FR gezeigt. Sie besteht aus einer Bodenunterschale 35, je einem Sitzquerträger 36, 37 vorne und hinten sowie einer Bodenoberschale 38. An vier Befestigungspunkten der nicht weiter dargestellten Sitzschienen werden dann je nach Anwendungsfall erfindungsgemäße Hybrid-Inserts 1, 26 sowohl für eine einschalige Bauweise als auch für eine zweischalige Bauweise eingeklebt. Die hier beispielhaft eingesetzten Bauformen entsprechen denen der Figuren 2a, 2b, 5a und 9a, 9b. Den Testanforderungen, in denen sowohl Dauerbelastungen unter Vibration und Temperaturschwankungen sowie crashrelevante Spitzenbelastungen zur Simulation eines Fahrzeuglebens ausgeübt worden, hielten alle Krafteinleitungsvorrichtungen 1, 16 in der Sitzkiste 34 erfolgreich stand. Damit wurde unter erheblicher Gewichtseinsparung eine neue Ersatzstruktur mit zuverlässigen Krafteinleitungspunkten geschaffen.

Noch weitere Vorteile einer erfindungsgemäßen Krafteinleitungsvorrichtung 1, 16 liegen in der getroffenen Material-Auswahl begründet: Es hat sich gezeigt, dass ein hybrid aufgebautes Element, bestehend aus langfaserverstärkten, duroplastischen Pressmassen, wie in den vorliegenden Ausführungsbeispielen SMC, und einem umpressten metallischen Gewindeeinsatz 2 nach der vorstehend exemplarisch beschriebenen Lehre, den an sie gestellten mechanischen Anforderungen am besten genügt. Ferner wird durch den Einsatz des elektrisch nichtleitenden Kunststoffs eine ausreichende galvanische Trennung zwischen dem Einsatz 2 aus Metall und der CFK-Struktur 3 erreicht. Der den Metalleinsatz 2 umgebende Kunststoff wirkt als elektrischer Isolator zwischen den Kohlefasern und auch gegenüber einer jeweiligen Einsatz-Hülse 2. Es bildet sich eine elektrische Isolation der Fasern gegeneinander und gegenüber einem Metalleinsatz 2 aus, der unmittelbar auch als Korrosionsschutz wirkt. Die direkte Integration von metallischen Elementen in Bauteile aus CFK erfordert demgegenüber nach dem Stand der Technik aufgrund hoher galvanischer Spannungspotentiale zwischen Kohlefasern und einem jeweiligen Metall aufwendige Korrosionsschutzmaßnahmen. Verfügbare Beschichtungen bieten über Fahrzeuglebensdauer keinen als ausreichend erachteten Schutz. Alternativwerkstoffe wie Titan sind aufgrund der Mehrkosten für höhere Stückzahlen ungeeignet. Abdichtmaßnahmen nach Einbringen der Metallelemente sind ebenfalls kosten- und zeitintensiv. In erfindungsgemäßen Ausführungsformen wird dagegen das Auftreten von Kontaktkorrosion, das nach dem Stand der Technik stets ein Problem ist, auch dauerhaft vermieden. Dadurch ist Aluminium als Material für einen Gewindeeinsatz 2 und/oder Werkstoff für die Hülse möglich, ohne dass zusätzliche Maßnahmen des Korrosionsschutzes ergriffen werden müssen. Erreichbar ist damit das Ziel einer Reduktion des Bauteilgewichts ohne wesentliche Schwächung einer auf dieser Basis aufgebauten Verbindung. Durch die teilweise Ausführung des Krafteinleitungselements in Kunststoff können deutliche Gewichtsvorteile gegenüber Stahl-basierten Verbindungen erzielt werden.

Im Zusammenhang mit den Belastungsversuchen und der Auswertung von Figur 7b wurde bereits darauf hingewiesen, dass ein faserverstärktes Duroplast, wie hier SMC, ein gutmütiges Versagensverhalten in Kombination mit einer hohen Energieaufnahme zeigt. Dies macht den Einsatz dieser Krafteinleitungselemente 1, 16 für crashrelevante Befestigungen in Verbindung mit insbesondere dünnwandigen Primärstrukturen 6 interessant. Für ein derartiges Strukturbauteil 8 werden üblicherweise Epoxydharz-Verbundstoffe eingesetzt. Als Materialien für die SMC-Struktur 3 einer Krafteinleitungsvorrichtung 1, 16 werden eine ungesättigte Polyestermatrix oder ein Thermoplast mit Glasfasern eingesetzt. Nachfolgend werden als Tabelle Materialeigenschaften von vier erfindungsgemäß eingesetzten und untersuchten SMCs laut Herstellerangaben wiedergegeben:

| | Norm | Einheit | Menzolit-Fibron SMC 0200 4363-23 | Menzolit-Fibron SMC 0200 4363-23-1 | Menzolit-Fibron SMC 1100 5188-73B | Menzolit-Fibron SMC 1100 5188-73B-1 |
|---|---|---|---|---|---|---|
| Materialbezeichnung | DIN 16913 | [-] | UP-GMSR 33 | UP-GMSR 29 | UP-GMSR 45 | UP-GMSR 45 |
| Glasgehalt | ISO 11667 | Gew% | 30 | 30 | 45 | 45 |
| Faserlänge | | [mm] | 25 | 50 | 25 | 50 |

Als Klebstoffe kommen Klebstoffe auf Epoxy- oder Polyurethan-Basis zum Einsatz. Durch die gezielte geometrische Abwandlung der obigen Geometrie des metallischen Gewindeeinsatzes 3 kann die Energieaufnahme bei Bauteilversagen beeinflusst werden. Variabel einstellbar sind hier weiter z.B. der Winkel am Boden des Tellers 22 sowie eine Veränderung der Wandstärke des Einsatzes 3.

Damit wird nach einem erfindungsgemäßen Verfahren eine wesentliche Verbesserung der Genauigkeit unter Realisierung mechanisch weit belastbareren Verbindung erreicht. Durch den Einsatz bekannter Materialien und fertigungsgerechte Formgebungen werden nach dem vorstehend offenbarten Konzept, dessen Kern eine Krafteinleitungsvorrichtung 1 ist, zudem Gewichts- und Kosteneinsparungen erzielt.

Im Rahmen der Darstellung der vorliegenden Erfindung wurden folgende Bezugszeichen und Abkürzungen benutzt:
- 1: Krafteinleitungsvorrichtung
- 2: metallischer Gewindeeinsatz
- 3: Struktur
- 4: Dom
- 5: Hinterschneidung
- 6: Primärstruktur
- 7 8: Strukturteil
- 9: Kleber / Kleberschicht
- 10: Sub- bzw. Unterstruktur
- 11: Einprägung / Ausnehmung
- 12 13: Rippe
- 14: Grundkörper
- 15: Grundfläche
- 16: Verstärkungsring
- 17 18: Zwischenraum
- 19 20: erste Hinterschneidung
- 21: zweite Hinterschneidung
- 22: Teller
- 23: Prüfhilfsmittel
- 24: Zugplatte
- 25 26: Krafteinleitungselement
- 27: Oberschale

- 28: Unterschale
- 29 30: Hülse
- 31: Gewinde
- 32: Durchführung
- 34: Ersatzstruktur / Sitzkiste
- 35: Bodenunterschale
- 36: Sitzquerträger
- 37: Sitzquerträger
- 38: Bodenoberschale

- α_{τ}: Tellerwinkel
- β: Winkel einer Rippe gegenüber einer benachbarten Telleroberfläche
- γ: Winkel einer Prägungswand gegen eine Flächennormale
- B: Außendurchmesser des Grundkörpers 14
- d: SMC-Materialdicke
- D: Druckspannung
- F: Kraft
- FR: Fahrtrichtung
- H: Hinterschneidungsscherkante
- K: Kraftübertragung zwischen Gewindeeinsatz und SMC-Dom
- L: Länge des Doms 4
- I: Länge der Durchführung 32
- N: Flächennormale / Normale
- NB: nicht belastungsgerechte Faserorientierung
- NT: nicht tragfähiger Bereich
- S: Staupunktströmung
- T: Prägungstiefe in der Primärstruktur
- Δt: Tiefe der Grundfläche der Struktur
- U: Umlenkung der Strömung
- x,y,z: Koordinaten des Raumes
- Z: Zugspannung
- FVK: faserverstärkter Kunststoff
- CFK: Kohle-Faser-verstärkter Kunststoff
- RTM: Resin transfer moulding
- SMC: Sheet moulding compound

## Patentansprüche

1. Strukturbauteil (8) mit einer Krafteinleitungsvorrichtung (1), die in oder an dem Strukturbauteil (8) fixiert ist, und die als hybrides Bauteil ausgeführt ist mit einem Einsatz (2) aus Metall, der in einer Struktur (3) aus Kunststoff fixiert ist, **dadurch gekennzeichnet, dass** die Struktur (3) zum Fixieren in einer Ausnehmung (11) des Strukturbauteils (8) ausgebildet ist.

2. Strukturbauteil mit einer Krafteinleitungsvorrichtung nach Anspruch 1, **dadurch gekennzeichnet, dass** die Struktur (3) zum Einkleben in eine im Wesentlichen tellerförmige Einprägung (11) in dem Strukturbauteil (8) ausgebildet ist.

3. Strukturbauteil mit einer Krafteinleitungsvorrichtung nach einem der vorhergehenden Ansprüche, **dadurch gekennzeichnet, dass** die Struktur (3) den Einsatz (2) im Wesentlichen umschließt, insbesondere in einer Ebene, deren Normale einer Hauptkraftangriffsrichtung entspricht.

4. Strukturbauteil mit einer Krafteinleitungsvorrichtung nach dem vorhergehenden Anspruch, **dadurch gekennzeichnet, dass** die Struktur (3) um den Einsatz (2) in einer axialen Richtung herum als Dom (4) ausgebildet ist, der über mindestens eine Rippe (13) auf einem Grundkörper (14) abgestützt ist.

5. Strukturbauteil mit einer Krafteinleitungsvorrichtung nach einem der vorhergehenden Ansprüche, **dadurch gekennzeichnet, dass** die Struktur (3) einen tellerartigen Grundkörper (14) aufweist.

6. Strukturbauteil mit einer Krafteinleitungsvorrichtung nach dem vorhergehenden Anspruch, **dadurch gekennzeichnet, dass** der tellerartige Grundkörper (14) durch einen Verstärkungsring (16) abgeschlossen ist.

7. Strukturbauteil mit einer Krafteinleitungsvorrichtung nach einem der vorhergehenden Ansprüche, **dadurch gekennzeichnet, dass** die Struktur (3) eine definierte Oberflächenrauigkeit mindestens in einem für eine Verklebung mit einer Ausnehmung oder Einprägung (11) einer Primärstruktur (6) vorgesehenen Oberflächenbereich einer Grundfläche (15) aufweist, die insbesondere durch Punzieren hergestellt worden ist.

8. Strukturbauteil mit einer Krafteinleitungsvorrichtung nach einem der vorhergehenden Ansprüche, **dadurch gekennzeichnet, dass** die Struktur (3) aus SMC besteht.

9. Strukturbauteil mit einer Krafteinleitungsvorrichtung nach dem vorhergehenden Anspruch, **dadurch gekennzeichnet, dass** der Glasgehalt des SMC-Materials der Struktur (3) von ca. 20 bis etwa 50, vorzugsweise aber von 30 bis 45 Gew.-% beträgt.

10. Strukturbauteil mit einer Krafteinleitungsvorrichtung nach einem der beiden vorhergehenden Ansprüche, **dadurch gekennzeichnet, dass** eine Faserlänge im SMC-Material der Struktur (3) von ca. 20mm bis etwa 60mm, vorzugsweise aber 25mm oder 50mm beträgt.

11. Strukturbauteil mit einer Krafteinleitungsvorrichtung nach einem der vorhergehenden Ansprüche, **dadurch gekennzeichnet, dass** der Einsatz (2) mindestens eine, vorzugsweise jedoch zwei Hinterschneidungen (20, 21) aufweist.

12. Strukturbauteil mit einer Krafteinleitungsvorrichtung nach dem vorhergehenden Anspruch, **dadurch gekennzeichnet, dass** die Hinterschneidungen (20, 21) gegensinnig orientiert sind.

13. Strukturbauteil mit einer Krafteinleitungsvorrichtung nach einem der vorhergehenden Ansprüche, **dadurch gekennzeichnet, dass** ein Zwischenraum (18) zwischen der oberen und unteren Hinterschneidung (20, 21) des Einsatzes (2) in axialer Richtung von dem Material der Struktur (3) ausgefüllt ist.

14. Strukturbauteil mit einer Krafteinleitungsvorrichtung nach einem der vorhergehenden Ansprüche, **dadurch gekennzeichnet, dass** eine Hinterschneidung (20) in Form eines Tellers (22) ausgebildet ist.

15. Strukturbauteil mit einer Krafteinleitungsvorrichtung nach dem vorhergehenden Anspruch, **dadurch gekennzeichnet, dass** der Teller (22) einen Winkel (α) in einem Bereich von etwa 0° bis ca. 50°, vorzugsweise einen Winkel von 45° gegenüber einer Flächennormalen (N) aufweist.

16. Strukturbauteil mit einer Krafteinleitungsvorrichtung nach einem der vorhergehenden Ansprüche, **dadurch gekennzeichnet, dass** mindestens in einem Bereich einer Durchführung (32) eine Verdrehsicherung zur Erhöhung einer Momentenbelastbarkeit vorgesehen ist, vorzugsweise durch teilweise Abflachung des sonst rotationssymmetrischen Körpers des Einsatzes (2).

17. Strukturbauteil mit einer Krafteinleitungsvorrichtung nach einem der vorhergehenden Ansprüche, **dadurch gekennzeichnet, dass** der Einsatz (2) aus Aluminium besteht.

18. Strukturbauteil mit einer Krafteinleitungsvorrichtung nach einem der vorhergehenden Ansprüche, **dadurch gekennzeichnet, dass** die Krafteinleitungsvorrichtung (1) zur Verklebung mit einer Ausnehmung oder Einprägung (11) des Strukturbauteils (8) durch einen Klebstoff (9) auf einer Epoxy- oder einer Polyurethan-Basis ausgebildet ist.

19. Strukturbauteil mit einer Krafteinleitungsvorrichtung nach einem der vorhergehenden Ansprüche, **dadurch gekennzeichnet, dass** die Ausnehmung oder Einprägung (11) in dem Strukturbauteil (8) einen Winkel (γ) von ca. 10° bis ungefähr 45°, vorzugsweise aber von etwa 30° als Winkel einer Prägungswand gegenüber einer Flächennormalen (N) aufweist.

## Claims

1. A structural component (8) comprising a force-introducing device (1) fixed in or to the structural component (8) and in the form of a hybrid component, with a metal insert (2) fixed in a plastics material structure (3), **characterised in that** the structure (3) is adapted for fixing in a recess (11) in the structural component (8).

2. A structural component comprising a force-introducing device according to claim 1, **characterised in that** the structure (3) is designed for sticking in a substantially plate-shaped indentation (11) in the structural component (8).

3. A structural component comprising a force-introducing device according to any of the preceding claims, **characterised in that** the structure (3) substantially surrounds the insert (2), especially in a plane having a normal corresponding to a main direction of application of force.

4. A structural component comprising a force-introducing device according to the preceding claim, **characterised in that** the structure (3) is in the form of a mandrel (4) in an axial direction round the insert (2) and supported by at least one rib (13) on a base member (14).

5. A structural component comprising a force-introducing device according to any of the preceding claims, **characterised in that** the structure (3) comprises a plate-shaped base member (14).

6. A structural component comprising a force-introducing device according to the preceding claim, **characterised in that** the plate-like base member (14) is closed by a reinforcing ring (16).

7. A structural component comprising a force-introducing device according to any of the preceding claims, **characterised in that** the structure (3) has a defined surface roughness at least in a surface region of a base surface (15) provided for sticking to a recess or indentation (11) in a primary structure (6), the base surface being produced especially by embossing.

8. A structural component comprising a force-introducing device according to any of the preceding claims, **characterised in that** the structure (3) is made of SMC (= sheet moulding compound).

9. A structural component comprising a force-introducing device according to the preceding claim, **characterised in that** the glass content of the SMC material in the structure (3) amounts to about 20 to about 50, preferably from 30 to 45% by weight.

10. A structural component comprising a force-introducing device according to either of the two preceding claims, **characterised in that** a fibre length in the SMC material in the structure (3) is from about 20 to about 60 mm, preferably 25 or 50 mm.

11. A structural component comprising a force-introducing device according to any of the preceding claims, **characterised in that** the insert (2) has at least one or preferably two undercuts (20, 21).

12. A structural component comprising a force-introducing device according to the preceding claim, **characterised in that** the undercuts (20, 21) extend in opposite directions.

13. A structural component comprising a force-introducing device according to any of the preceding claims, **characterised in that** a space (18) between the top and bottom undercut (20, 21) in the insert (2) is filled in the axial direction by the material in the structure (3).

14. A structural component comprising a force-introducing device according to any of the preceding claims, **characterised in that** an undercut (20) is in the shape of a plate (22).

15. A structural component comprising a force-introducing device according to the preceding claim, **characterised in that** the plate (22) has an angle ( ) in a range from about 0 to about 50 , preferably at angle of 45 to a normal (N) to the surface.

16. A structural component comprising a force-introducing device according to any of the preceding claims, **characterised in that** at least in a region of a lead-through (32) a rotation preventing means is provided for increasing an instantaneous loading capacity, preferably by partial flattening of the otherwise axially symmetrical body of the insert (2).

17. A structural component comprising a force-introducing device according to any of the preceding claims, **characterised in that** the insert (2) is made of aluminium.

18. A structural component comprising a force-introducing device according to any of the preceding claims, **characterised in that** the force-introducing device (1) is designed for sticking to a recess or indentation (11) in the structural component (8), using an epoxy or a polyurethane-based adhesive (9).

19. A structural component comprising a force-introducing device according to any of the preceding claims, **characterised in that** the recess or indentation (11) in the structural component (8) has an angle (γ) of about 10 to about 45 , preferably about 30 , i.e. an angle of an indented wall to a normal (N) to the surface.

## Revendications

1. Elément de structure (8) comprenant un dispositif d'application d'une force (1) qui est fixé dans ou sur cet élément de structure (8) et qui est réalisé sous la forme d'un élément hybride avec un insert (2) en métal qui est fixé dans une structure (3) en matériau synthétique, **caractérisé en ce que**
la structure (3) est réalisée pour être fixée dans un évidement (11) de l'élément de structure (8).

2. Elément de structure comportant un dispositif d'application d'une force conforme à la revendication 1,
**caractérisé en ce que**
la structure (3) est réalisée pour pouvoir être collée dans une empreinte, essentiellement en forme de disque (11) de l'élément de structure (8).

3. Elément de structure comprenant un dispositif d'application d'une force conforme à l'une des revendications précédentes,
**caractérisé en ce que** la structure (3) entoure essentiellement l'insert (2), en particulier dans un plan dont l'anormale correspond à une direction d'application d'une force principale.

4. Elément de structure comprenant un dispositif d'application d'une force conforme à la revendication précédente,
**caractérisé en ce que**
la structure (3) est réalisée autour de l'insert (2) en direction axiale sous la forme d'un dôme (4) qui s'appuie sur un corps de base (14) par l'intermédiaire d'au moins une nervure (13).

5. Elément de structure comprenant un dispositif d'application d'une force conforme à l'une des revendications précédentes,
**caractérisé en ce que**
la structure (3) comporte un corps de base (14) en forme de disque.

6. Elément de structure comprenant un dispositif d'application d'une force conforme à l'une des revendications précédentes,
**caractérisé en ce que**
le corps de base (14) en forme de disque est fermé par une bague de renforcement (16).

7. Elément de structure comprenant un dispositif d'application d'une force conforme à l'une des revendications précédentes,
**caractérisé en ce que**
la structure (3) présente une rugosité surfacique définie au moins dans une zone de la surface d'une surface de base (15) prévue pour permettre un collage avec une cavité ou une empreinte (11) d'une structure primaire (6) et qui a en particulier été obtenue par poinçonnage.

8. Elément de structure comprenant un dispositif d'application d'une force conforme à l'une des revendications précédentes,
**caractérisé en ce que**
la structure (3) est réalisée en SMC.

9. Elément de structure comprenant un dispositif d'application d'une force conforme à l'une des revendications précédentes,
**caractérisé en ce que**
la teneur en verre du matériau SMC de la structure (3) est égale à environ 20 à environ 50, de préférence toutefois à 30 à 45 % en poids.

10. Elément de structure comprenant un dispositif d'application d'une force conforme à l'une des revendications précédentes,
**caractérisé en ce que**
la longueur des fibres dans le matériau SMC de la structure 3 est égale à environ 20 à environ 60 mm, de préférence toutefois à 25 mm ou 50mm.

11. Elément de structure comprenant un dispositif d'application d'une force conforme à l'une des revendications précédentes,
**caractérisé en ce que**
l'insert (2) comporte au moins une, et de préférence toutefois deux contre-dépouilles (20, 21)

12. Elément de structure comprenant un dispositif d'application d'une force conforme à la revendication précédente,
**caractérisé en ce que**
les contre-dépouilles (20, 21) sont orientées en sens opposé.

13. Elément de structure comprenant un dispositif d'application d'une force conforme à l'une des revendications précédentes **caractérisé en ce que**
le volume intermédiaire (18) situé entre les contre-dépouilles supérieur et inférieur (20, 21) de l'insert (2) en direction axiale est rempli par le matériau de la structure (3).

14. Elément de structure comprenant un dispositif d'application d'une force conforme à l'une des revendications précédentes,
**caractérisé en ce qu'**
une contre-dépouille (20) est réalisée sous la forme d'un disque (22).

15. Elément de structure comprenant un dispositif d'application d'une force conforme à la revendication précédente,
**caractérisé en ce que**
le disque (22) présente un rapport à une normale (N) à la surface un angle (α) situé dans une plage d'environ 0° à environ 50°, de préférence un angle de 45°

16. Elément de structure comprenant un dispositif d'application d'une force conforme à l'une des revendications précédentes,
**caractérisé en ce qu'**
au moins dans la zone d'un passage (32) il est prévu un élément de protection anti-rotation pour augmenter la charge momentanée, de préférence par aplatissement partiel du corps de l'insert (2) sinon symétrique en rotation.

17. Elément de structure comprenant un dispositif d'application d'une force conforme à l'une des revendications précédentes,
**caractérisé en ce que**
l'insert (2) est réalisé en aluminium

18. Elément de structure comprenant un dispositif d'application d'une force conforme à l'une des revendications précédentes,
**caractérisé en ce que**
le dispositif d'application d'une force (1) est réalisé pour permettre le collage avec un évidement ou une empreinte (11) de l'élément de structure (8) avec une colle (9) à base de résine d'epoxy ou de polyuréthane.

19. Elément de structure comprenant un dispositif d'application d'une force conforme à l'une des revendications précédentes,
**caractérisé en ce que**
l'évidement ou l'empreinte (11) réalisé dans l'élément de structure (8) présente un angle (y) d'environ 10° à environ 45°, de préférence, toutefois, d'environ 30° en tant qu'angle d'une paroi d'estampage par rapport à la normale (N) à la surface.
